(19) Europäisches Patentamt
European Patent Office
Office européen des brevets

(11) **EP 3 828 783 A1**

(12) **EUROPEAN PATENT APPLICATION**

(43) Date of publication:
**02.06.2021 Bulletin 2021/22**

(51) Int Cl.:
**G06N 20/00** *(2019.01)*    **G06N 7/00** *(2006.01)*

(21) Application number: **19212209.1**

(22) Date of filing: **28.11.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(71) Applicant: **Secondmind Limited**
**Cambridge, Cambridgeshire CB2 1LA (GB)**

(72) Inventors:
• **PICHENY, Victor**
**Cambridge, Cambridgeshire CB2 1LA (GB)**

• **DUTORDOIR, Vincent**
**Cambridge, Cambridgeshire CB2 1LA (GB)**
• **DURRANDE, Nicolas**
**Cambridge, Cambridgeshire CB2 1LA (GB)**
• **ARTEMEV, Artem**
**Cambridge, Cambridgeshire CB2 1LA (GB)**

(74) Representative: **EIP**
**Fairfax House**
**15 Fulwood Place**
**London WC1V 6HU (GB)**

(54) **PARALLELISED TRAINING OF MACHINE LEARNING MODELS**

(57)    A computer-implemented method of training a machine learning model using a training dataset and a plurality of processing nodes, the machine learning model having a set of parameters and an associated objective function providing performance measures for the machine learning model as the values for the set of parameters change during training. The method includes setting initial values for the set of parameters for the machine learning model and providing the initial values to each of the processing nodes, setting a respective different initial learning rate for each of the processing nodes, and initialising a predictive model that predicts values of the objective function following a next sequence of stochastic gradient steps at respective different learning rates. The method further includes iteratively: generating, by each of the processing nodes, a respective optimisation trace and respective updated values for the set of parameters according to a sequence of stochastic gradient steps using the respective learning rate; updating the predictive model using the generated optimisation traces; determining the processing node providing the best performance on the basis of the generated optimisation traces; updating the values for the set of parameters for each processing node to the updated values of the processing node determined to provide the best performance; and updating the respective different learning rate for each of the processing nodes on the basis of the updated predictive model.

Fig. 3

EP 3 828 783 A1

**Description**

Technical Field

The present invention relates to the computational implementation of machine learning models. The invention has particular relevance to the training of machine learning models using multiple processing nodes.

Background

Machine learning involves a computer system learning how to analyse input data to determine an output, rather than being programmed explicitly how to do so by a user. In order for a machine learning model to be useful, the model must be trained using a training dataset. For supervised learning, the training dataset includes labelled training data. For unsupervised learning, the training dataset includes unlabelled training data. For reinforcement learning, the training dataset includes experience data indicating states, actions and rewards encountered by a reinforcement learning agent.

Generally, a machine learning model is parameterised by a set of parameters which may be expressed as a parameter vector $\theta$, and has an associated objective function $\mathcal{L}$, which provides performance measures of the model as the parameter vector is modified during training (for example, how well the model fits the training dataset in supervised or unsupervised learning).

Many types of machine learning model can be trained using stochastic gradient methods, which are defined by an iterative update rule as shown in Equation (1):

$$\theta_{t+1} = \theta_t \pm \alpha_t P^{-1} g_t, \qquad\qquad (1)$$

in which: $\theta_t$ is the value of the parameter vector at iteration $t$; $\pm$ corresponds to gradient ascent/descent; $g_t$ is an unbiased stochastic estimate of the gradient $\nabla_\theta \mathcal{L}|_{\theta=\theta_t}$ of the objective function at iteration t; $P$ is a preconditioning matrix that affects the direction and the size of the update; and $\alpha_t$ is a learning rate or step size at iteration $t$. The gradient estimate $g_t$ is typically calculated using reverse-mode differentiation or backpropagation for one or more randomly-sampled data points within the training dataset.

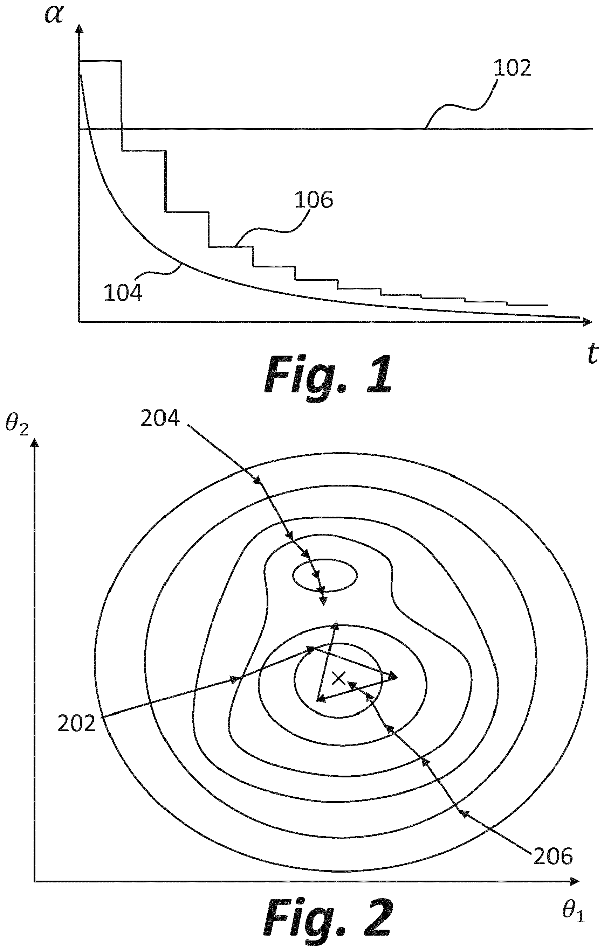

Conventionally, stochastic gradient methods are implemented using either a fixed learning rate or a learning rate which varies according to a predetermined schedule. Figure 1 shows three examples of learning rate schedules as commonly employed in the art. The horizontal line 102 represents a fixed learning rate $\alpha_t = k_0$, the curve 104 represents an exponentially decaying learning rate $\alpha_t = k_1 e^{-t/\gamma_1}$, and the stepped line 106 represents a learning rate which remains constant within epochs of a predetermined number of iterations, and decays exponentially between the epochs as $\alpha_t = k_2 e^{-epoch/\gamma_2}$. For a fixed learning rate, the magnitude of the gradient update is proportional to the magnitude of the stochastic gradient estimate. If the learning rate is too high, the parameters may fail to converge to true optimal values. If the learning rate is too low, the parameters are likely to become stuck at suboptimal values, or otherwise to take a prohibitively large number of iterations to converge. Choosing an exponentially decreasing learning rate has been found to mitigate these effects to some extent, because the values of the parameters go through much larger updates initially when far from their optimal values, and smaller, fine-tuning updates when close to the global optimum. However, without prior knowledge of the optimisation surface, it is difficult to tune the parameters $k$, $\gamma$, and for poorly chosen parameters, the same issues arise as for a fixed learning rate.

Figure 2 shows contour lines of an objective function $\mathcal{L}$ in a two-dimensional parameter space with $\theta = (\theta_1, \theta_2)^{\mathsf{T}}$.

The global optimum of $\mathcal{L}$ is shown by a cross. The optimisation path 202 (including 5 update steps) illustrates a possible effect of choosing an exponentially decaying learning rate which decays too slowly. It is observed that the path 202 does not converge to the true optimum, and instead repeatedly overshoots the optimum. The optimisation path 204 illustrates a possible effect of choosing an exponentially decaying learning rate which decays too quickly. It is observed that the path 204 does not reach the global optimum and instead gets stuck at a non-critical point. Finally, the optimisation path 206 illustrates the effect of choosing a well-tuned exponentially decaying learning rate. It is observed that the path 206 converges gracefully to the global optimum in a practicable number of iterations.

For high-dimensional parameter spaces which are typical of many machine learning models, an appropriate learning rate schedule is critical to the performance of the stochastic gradient method, and hence the practicability of the model. However, as mentioned above, very little guidance is generally available for choosing the learning rate schedule. As a result, practitioners typically rely on rules of thumb, trial and error, grid searches or random search methods. These methods can be exceptionally burdensome, limiting the efficiency with which machine learning models can be trained.

Recent attempts to address the issues described above have focused on treating the learning rate as a hyperparameter to be optimised using Bayesian optimisation (along with other hyperparameters associated with the training procedure). Examples are given in: "Freeze-thaw Bayesian optimization" by Swerky et al, 2018, arXiv:1406.3896; "Hyperband: A novel bandit-based approach to hyperparameter optimization" by Li et al, 2018, Journal of Machine Learning Research 18(185):1-52; and "Bohb: Robust and efficient hyperparameter optimization at scale" by Falkner et al, 2018, arXiv:1807.01774. In each of these examples, the Bayesian optimisation procedure involves performing a large number of independent stochastic gradient runs, and using the outcome of these independent runs to select an appropriate set of hyperparameters for training the model, including an appropriate learning rate. Although forecasting models can be used to stop unpromising runs, performing a large number of independent training runs is often no more efficient than pursuing a longer single training run using a heuristically chosen learning rate.

Summary

According to a first aspect of the present invention, there is provided a computer-implemented method of training a machine learning model using a training dataset and a plurality of processing nodes, the machine learning model having a set of parameters and an associated objective function providing performance measures for the machine learning model as the values for the set of parameters change during training. The method includes setting initial values for the set of parameters for the machine learning model and providing the initial values to each of the processing nodes, setting a respective different initial learning rate for each of the processing nodes, and initialising a predictive model that predicts values of the objective function following a next sequence of stochastic gradient steps at respective different learning rates. The method further includes iteratively: generating, by each of the processing nodes, a respective optimisation trace and respective updated values for the set of parameters according to a sequence of stochastic gradient steps using the respective learning rate; updating the predictive model using the generated optimisation traces; determining the processing node providing the best performance on the basis of the generated optimisation traces; updating the values for the set of parameters for each processing node to the updated values of the processing node determined to provide the best performance; and updating the respective different learning rate for each of the processing nodes on the basis of the updated predictive model.

By generating optimisation traces in parallel across multiple processing nodes with respective different learning rates, and processing these traces together to inform a predictive model from which new learning rates are determined, the present invention allows for dynamic, on-line tuning of the learning rate. Whilst information from all of the optimisation traces is used, only the best optimisation trace is pursued at the end of each interval. In this way, parallel computing resources are leveraged in a co-operative fashion to achieve significantly more efficient training of the machine learning model compared with simply optimising the learning rate over multiple independent training runs.

Further features and advantages of the invention will become apparent from the following description of preferred embodiments of the invention, given by way of example only, which is made with reference to the accompanying drawings.

Brief Description of the Drawings

Figure 1 is a graph of three curves representing examples of learning rate schedules, in accordance with the prior art.
Figure 2 shows schematically three optimisation paths corresponding to the three learning rates schedules of Figure 1.
Figure 3 is a schematic block diagram showing a data processing system arranged in accordance with an embodiment of the present invention.
Figure 4 is a diagram showing the exchange of messages between components of the data processing system of Figure 3 in accordance with an embodiment of the present invention.
Figure 5 shows an example of learning rates being updated in accordance with an embodiment of the present invention.
Figure 6 shows an optimisation trace resulting from the learning rate updates of Figure 5.
Figure 7 shows an example of a predicted distribution of an objective function accordance with an embodiment of the present invention.
Figures 8a and 8b show predicted distributions of an objective function as a function of iteration number, for two choices of learning rate.
Figure 9 shows results of a numerical experiment in which a deep neural network is optimised in accordance with an embodiment of the present invention.
Figure 10 is a schematic block diagram showing a reinforcement learning system incorporating an embodiment of

the present invention.

<u>Detailed Description</u>

**Example data processing system**

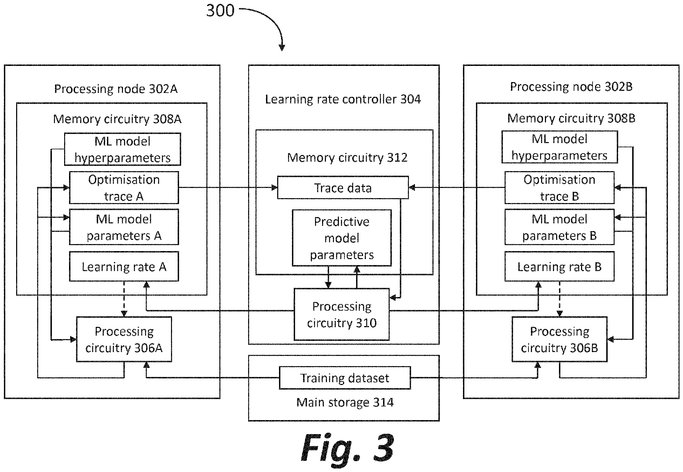

Figure 3 shows an example of a data processing system 300 arranged to train a machine learning model in accordance with an embodiment of the present invention. The system includes various additional components not shown in Figure 3 such as input/output devices, network interfaces, and the like. The data processing system 300 includes a first processing node 302a, a second processing node 302b, and a learning rate controller 304. Each processing node 302 has associated processing circuitry 306 and memory circuitry 308, and the learning rate controller 304 has associated processing circuitry 310 and memory circuitry 312. In the present example, the processing circuitry 306 of each processing node 302 includes a graphics processing unit (GPU), and the memory circuitry 308 of each processing node 302 includes volatile random-access memory (RAM), in particular static random-access memory (SRAM) and dynamic random-access memory (DRAM). In other examples, processing nodes may include, alternatively or additionally, one or more other processors, for example a neural network accelerator and/or a central processing unit (CPU). In this example, the processing circuitry 310 of the learning rate controller 304 includes a CPU and the memory circuitry 312 of the learning rate controller 304 includes further RAM. Although the memory circuitry 308 of the processing nodes 302 and the memory circuitry 312 of the learning rate controller 304 are shown as being separate from one another, those skilled in the art will appreciate that the processing nodes 302 and learning controller 304 could alternatively share memory, for example with different portions of the memory being allocated dynamically to the different components.

In the present examples, the data processing system 300 is a compute cluster, with the processing nodes 302 and the learning controller 304 being separate nodes of the cluster. In some examples, two or more processing nodes and a learning rate controller may be connected by a network such a local area network (LAN), a wide area network (WAN), the Internet, or any other suitable network. In other examples, two or more processing nodes may be implemented within a single computing device, for example by multiple GPUs or other types of processor within the device. A learning rate controller may be implemented using processing circuitry that is separate from the processing nodes, as in the case of the data processing system 300, or may be implemented using the same processing circuitry as one or more of the processing nodes.

The data processing system 300 further includes main storage 314, which in this example is a solid-state drive (SSD) for non-volatile storage of relatively large volumes of data. In other examples, main storage may additionally or instead include a hard disk drive and/or removable storage devices. The main storage 314 is arranged to store a training dataset for training a machine learning model. For certain applications, the training dataset may be received in a streaming fashion as opposed to being stored in advance, in which case the data processing system 300 may be used to train a machine learning model on-line.

The machine learning model may be any machine learning model trainable using stochastic gradient methods, for example a supervised learning model, an unsupervised learning model or a model associated with a reinforcement learning algorithm. The machine learning model may include one or more artificial neural networks, support vector machines, Gaussian processes or the like. The machine learning model has an associated set of machine learning model parameters, and training the machine learning model amounts to modifying the values of the machine learning model parameters until the machine learning model fits the training dataset according to some predetermined criteria. The machine learning model may also have hyperparameters reflecting model selection, the values of which in some cases are not modified during the training procedure. For example, in the case of a machine learning model including an artificial neural network, the hyperparameters may include information relating to the network architecture. Moreover, the machine learning model has an associated objective function (which may be referred to as an optimisation objective, a loss function or a cost function depending on the context) which provides performance measures of the machine learning model when applied to the training dataset, as the values of the machine learning model parameters are changed during training.

Training the machine learning model is achieved by iteratively updating the values of the machine learning model parameters using a stochastic gradient method as shown in Equation (1) above to increase or decrease the associated objective function. Specific stochastic gradient methods differ from one another other by using different preconditioning matrices. For example, for ordinary stochastic gradient descent, the preconditioning matrix $P$ is an identity matrix. For Adam, $P$ is a diagonal matrix with elements $$P_{ii} = \left(\sqrt{v_i} + \epsilon\right)m_i^{-1},$$ where $m_i$ and $v_i$ are the bias-corrected exponential moving averages of the components $[g_t]_i$ and $([g_t]_i)^2$ respectively, and $\varepsilon$ is a fixed small number (for example, $\varepsilon = 10^{-8}$ or any other suitably small number). For Limited-Memory Broyden-Fletcher-Goldfarb-Shanno (L-BFGS), $P$ is an approximation of a Hessian matrix. For natural gradient descent, *P* is a Fisher information matrix.

Unlike in conventional implementations of stochastic gradient ascent/descent, in which the learning rate is predetermined, the present invention involves dynamically updating the learning rate at certain intervals on the basis of information gathered from multiple parallel optimisation runs. In order to implement the machine learning model in accordance with the present method, the memory circuitry 308 of each processing node 302 stores, at a given time, a common set of values for hyperparameters for the machine learning model, respective values of a set of parameters for the machine learning model, a respective learning rate, and a respective optimisation trace formed of stochastic estimates of the objective function at a respective sequence of stochastic gradient steps within a given training interval. The memory circuitry 312 of the learning rate controller 304 stores trace data received from the processing nodes 302, and values of parameters for a predictive model for optimisation traces generated by the processing nodes 302.

**Example training method**

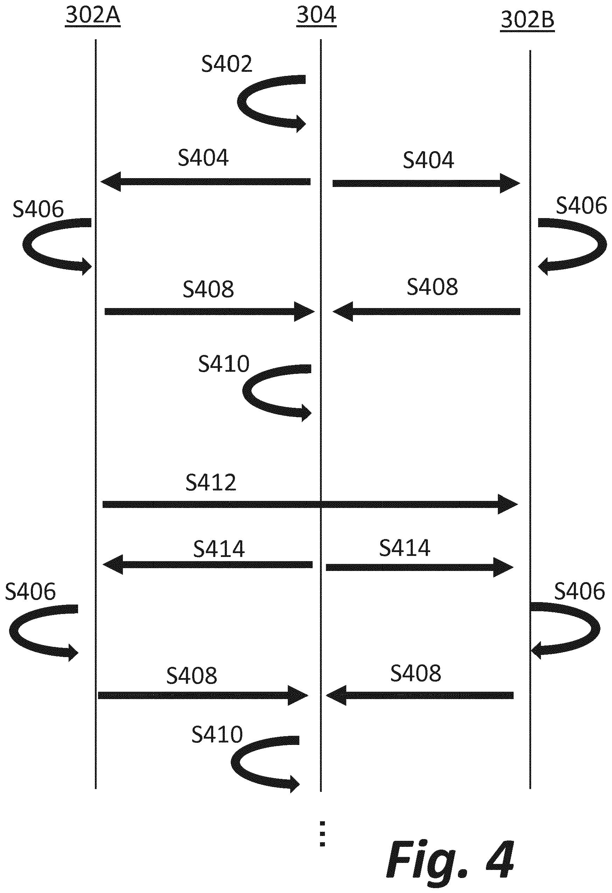

Figure 4 shows an example of a method performed by the data processing system 300 to train a machine learning model on a given training dataset. The data processing system 300 initialises, at S402: values for a set of parameters for the machine learning model; values for parameters of the predictive model for optimisation traces; and a respective learning rate for each of the processing nodes 302. As mentioned above, an optimisation trace includes stochastic estimates of an objective function at a sequence of stochastic gradient steps. The predictive trace model is arranged to predict subsequent values of the optimisation trace for a given learning rate and previously observed values of the optimisation trace. Examples of specific predictive trace models will be described in detail hereinafter.

In the present example, the learning rate controller 304 sets initial values for the parameters of the machine learning model and the predictive trace model, as well as the learning rates for each of the processing nodes 302. In other examples, the values of the machine learning model parameters may be initialised instead by one of the processing nodes 302. In the present example, the values of the machine learning model parameters and the predictive trace model parameters are initialised randomly, though in other examples, other initialisation strategies may be employed, for example on the basis of some prior empirical data. The learning rates are initialised at predetermined values, for example on a regular grid in log space or linear space between predetermined bounds. In examples involving more than two processing nodes, it is beneficial for the initial learning rates to be spread out between the bounds to provide sufficient initial exploration over learning rates. Nevertheless, in some examples, learning rates may be initialised differently, for example on a non-regular grid, or randomly.

The data processing system 300 generates a respective copy of the initial values of the machine learning model parameters for each of the processing nodes 302, and sends, at S404, the respective copies to the processing nodes 302 along with the initialised learning rates, such that the memory circuitry 308 of each of the processing nodes 302 stores a common set of values for the machine learning model parameters and a respective different learning rate. In examples where one of the processing nodes 302 initialises the values of the machine learning model parameters, that processing node 302 transmits a copy of the initialised values to the other processing nodes 302.

Having stored identical values of the machine learning model parameters and having been provided with a respective learning rate, each of the processing nodes 302 performs, at S406, a predetermined number of stochastic gradient steps using the respective learning rate, to update the values of the machine learning model parameters. In doing so, each processing node generates a respective optimisation trace including unbiased stochastic estimates of the objective function, determined by sampling either a single data point or a mini-batch of data points from the training dataset, at a respective sequence of stochastic gradient steps.

In the present example, each of the processing nodes 302 performs the same predetermined number of stochastic gradient steps. A lower number of stochastic gradient steps will result in more frequent updating of the learning rate, which may result in improved performance of the optimisation method and more efficient training of the machine learning model. However, as will be explained in more detail hereafter, more frequent updating of the learning rate will result in higher overheads associated with the updating of the learning rate. A suitable number of gradient descent steps for a given interval may be, for example, 10, 20, 50, 100 or 1000 steps, depending on the complexity of the machine learning model and the availability of computational resources.

Due to the stochastic nature of the optimisation process and the differing learning rates, different processing nodes 302 will generally generate parameter updates along different optimisation paths, resulting in different updated parameter values and different optimisation traces. Each processing node 302 sends, at S408, respective trace data to the learning rate controller 304. In the present example, the respective trace data includes the entire respective optimisation trace (in other words, a stochastic estimate of the objective function at each step in the sequence of stochastic gradient steps). In other examples, trace data may include a subset of the optimisation trace values, for example every second, tenth, fiftieth or hundredth value from the optimisation trace. This latter approach will result in reduced computational overheads in the following stages of the method, and therefore may be appropriate where computational resources are limited.

The learning rate controller 304 updates, at S410, the predictive trace model using the trace data received from the processing nodes 302. As will be explained in more detail hereafter, the predictive trace model is used to determine updated learning rate values, and therefore leveraging the empirical trace data to improve the predictive power of the trace model allows for better choices of learning rates for subsequent intervals in the optimisation procedure.

The learning rate controller 304 determines which of the processing nodes 302 provided the best performance on the basis of the generated optimisation traces. The best performance corresponds to the highest (or lowest) final value of the optimisation trace at the end of the previous interval (in other words, the highest or lowest current estimate of the objective function). The learning rate controller 314 then instructs the best performing processing node 302 to send, at S412, the corresponding best values of the machine learning model parameters to each of the other processing nodes 302. In effect, the values of the machine learning model parameters stored by each processing nodes are updated to those of the best performing processing node 302 for that interval. In the present example, the processing node 302A is determined to have performed better than the processing node 302B, and therefore the learning rate controller 304 instructs the processing node 302A to send its respective updated values of the machine learning model parameters to the processing node 302B.

The learning rate controller updates, at S414, the respective learning rates for each of the processing nodes 302. The respective learning rates are updated on the basis of predetermined criteria using the updated predictive trace model. As mentioned above, the predictive trace model is arranged to predict subsequent values of the optimisation trace for a given learning rate and previously observed values of the optimisation trace. For a given learning rate, the predictive trace model is therefore able to predict a value of the objective function at the end of a subsequent interval. More specifically, the predictive trace model is able to give a probabilistic prediction of the objective function at the end of the subsequent interval, including, for example, predicted quantiles. As will be explained in more detail hereafter, these probabilistic predictions can be used to determine updated values of the learning rate. The choice of updated learning rates poses an exploration/exploitation dilemma; an optimistic choice of learning rate may result in very fast progress in training the machine learning model, but is also quite likely to result in very slow progress. A more risk-averse choice is unlikely to result in very fast progress, but is less likely to result in very slow progress. In the present example, a set of learning rates is determined which ranges from optimistic to risk averse, thereby simultaneously implementing different strategies in view of the exploration/exploitation dilemma.

The steps S406-S414 are performed iteratively, resulting in regular updating of the learning rates on the basis of a predictive trace model which takes into account all of the optimisation traces generated by the processing nodes 302. This process continues until a stopping condition is determined to be satisfied. In some examples, the stopping condition involves predetermined convergence criteria being satisfied. Suitable convergence criteria are well-known to those skilled in the art, and include, for example, a magnitude of the stochastic gradient estimates being less than a predetermined threshold value over one or more stochastic gradient steps, or a rate of change in magnitude of the stochastic gradient estimates being less than a predetermined threshold value over one or more stochastic gradient steps. In other examples, the stopping condition involves a predetermined number of stochastic gradient steps having been performed.

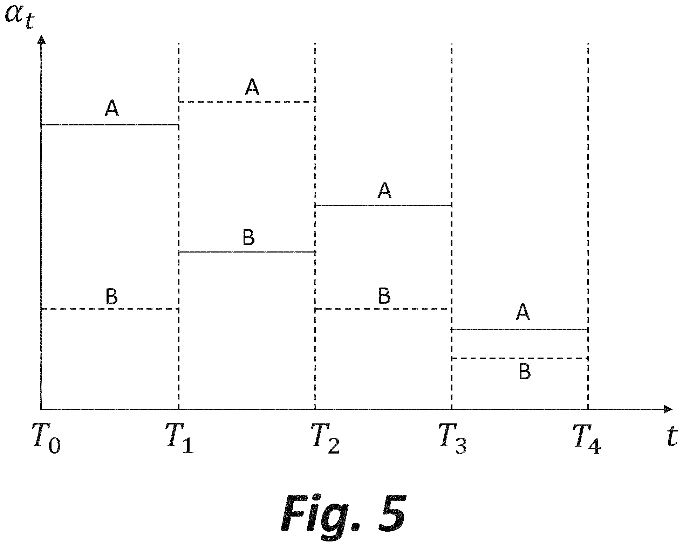

Figure 5 shows an example in which learning rates for the processing nodes 302 are dynamically updated in accordance with the present invention. The learning rates are updated at predetermined numbers $T_0,..., T_4$ of stochastic gradient steps. In this example, the number of steps in each interval $[T_i, T_{i+1}]$ is the same. The horizontal line segments labelled A are the learning rates provided to the processing node 302A, and the horizontal line segments labelled B are the learning rates provided to the processing node 302B. It is observed that, in the earliest intervals, the range between the learning rates is relatively high, as the predictive trace model has not consumed much trace data and therefore exploration is favoured. For later intervals, the range between the learning rates becomes smaller, as the predictive trace model consumes more trace data and becomes more accurate, and therefore exploitation is favoured. After a large number of intervals, the predictive trace model may become so accurate that the processing nodes are provided with practically the same learning rates. In the present example, the learning rates are constant between the updating of the learning rates, resulting in a piecewise constant learning rate for each processing node 302. In other example, the learning rate may vary between the updates, for example by decreasing exponentially between the updates, resulting in a piecewise exponential learning rate for each of the processing nodes 302.

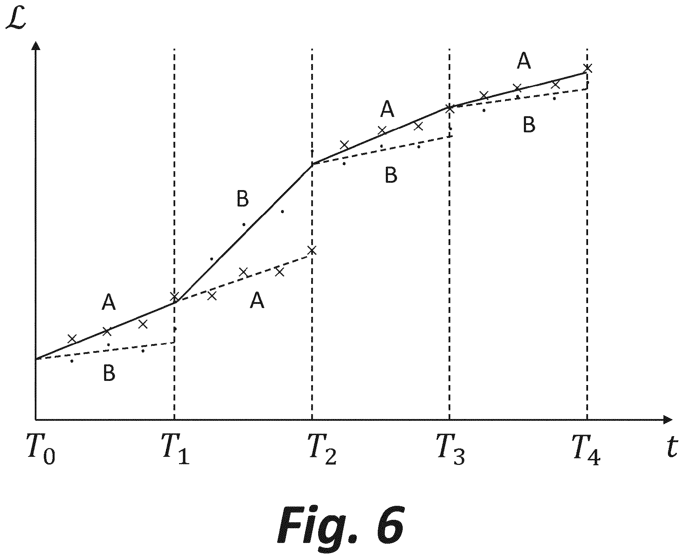

At the end of each interval, the actual best parameters for the machine learning model are identified and copied across the processing nodes 302 to pursue into the following interval. In Figure 5, the solid horizontal line segments represent the learning rates for each interval which provided the best performance and thus resulted in the best parameters at the end of each interval. Figure 6 shows a composite optimisation trace resulting from the learning rates of Figure 5.

The crosses are stochastic estimates of the objective function $\mathcal{L}$ generated by the processing node 302A, and the dots are stochastic estimates of the objective function $\mathcal{L}$ generated by the processing node 302B. For each interval $[T_i, T_{i+1}]$, a line of best fit is provided for the resulting optimisation traces generated by each of the processing nodes 302. At the end of each interval, the best optimisation trace is identified and pursued by both of the processing nodes 302 in the next interval.

**Example predictive trace model**

As mentioned above, an example of a predictive trace model suitable for implementing the present invention is a probabilistic trace model arranged to generate probabilistic predictions for optimisation traces, including, for example, predicted quantiles for optimisation traces. Denoting $\mathbf{X} = \{x_k\}_{k=0}^{d-1}$ as a vector with entries representing the learning rates for a given optimisation trace, and the machine learning model parameters at any point on a given optimisation trace as $\theta(\mathbf{x}, t)$, the corresponding value of the objective function is given by $y(\mathbf{x}, t) = \mathcal{L}[\theta(\mathbf{x}, t)].$ The values of the objective function at the changing points of the learning rate are denoted $Y_k = y(\mathbf{x}, T_k)$. A predictive model for the optimisation traces in the interval $T_k < t < T_{k+1}$ is proposed as given by Equation (2):

$$y(\mathbf{x}, t) = Y_k + \Gamma\left(\{Y_{k-l}\}_{l=0}^{q-1}, \{x_{k-l}\}_{l=0}^{q-1}, t - T_k\right), \qquad (2)$$

where $\Gamma$ is a specified function and $q \geq 1$. Equation (2) states that the increment in the objective function within a given interval depends on the value of the objective function at the start of the interval and at the start of $q - 1$ preceding intervals, and the learning rate within the interval and $q - 1$ preceding intervals. In other words, the model of Equation (2) is Markovian, with q denoting the order of the Markov chain. Higher values of $q$ result in a model which takes into account more preceding intervals, but also result in higher computational overheads for generating and updating the predictive trace model. In experiments conducted by the inventors, it has been observed that in many cases setting $q$ = 1 achieves the correct balance between accuracy and acceptable overheads.

In an example, the increment in the objective function is assumed to be given by a link function $\eta$ which has parameters depending on a latent function $f$ with one or more components distributed as Gaussian processes. The latent function is dependent on the learning rate and the value of the objective function at the start of the interval and $q - 1$ preceding intervals, resulting in a model as shown in Equation (3):

$$y(\mathbf{x}, t) = Y_k + \eta\left[f\left(\{Y_{k-l}\}_{l=0}^{q-1}, \{x_{k-l}\}_{l=0}^{q-1}\right), t - T_k\right]. \qquad (3)$$

One example of a suitable link function $\eta$ is a linear link function $\eta_{lin}(f, t) = \Phi(f_1)t$, which has a slope $\Phi(f_1)$ depending on the sole component $f_1$ of the latent function A second example is an exponential link function $\eta_{exp}(f,t) = \Phi(f_1)(1 - \exp(-\Phi(f_2)t))$, which has a logit offset $\Phi(f_1)$ depending on a first component $f_1$ of the latent function, and a logit rate $\Phi(f_2)$ depending on a second component $f_2$ of the latent function. In these examples, $\Phi$ is a strictly positive function for ensuring monotonicity of the optimisation traces, for example the softplus function. It is noted that many other examples of link functions are possible, and other forms of the predictive model of Equation (2) may be used of without departing from the scope of the invention.

In the example of a single-component latent function, the latent function is given a Gaussian process prior as shown in Equation (4):

$$f \sim \mathrm{GP}\left(0, K(\cdot, \cdot)\right), \qquad (4)$$

where $K$ is a kernel, for example a squared exponential kernel, a Matérn kernel, or any other suitable form of kernel. In the case of a latent function with multiple components, each component may be given an independent Gaussian process prior, or alternatively the components may be given correlated Gaussian process priors.

In the present example, it is assumed that observations of the trace (in other words, stochastic estimates of the objective function encountered during the optimisation run) are noisy observations of the objective function corrupted by Gaussian noise with variance $\sigma^2$, as shown in Equation (5):

$$y_j^i | f, Y_k^i, x_k^i, t_j^i \sim \mathrm{N}\left(y_j^i \left| \eta\left[f\left(\{Y_{k-l}^i\}_{l=0}^{q-1}, \{x_{k-l}^i\}_{l=0}^{q-1}\right), t_j^i - T_k\right], \sigma^2\right.\right), \qquad (5)$$

where the index *i* denotes values encountered on a composite optimisation trace currently being pursued by the *i*th

processing node. Specifically, $y_j^i$ denotes a stochastic estimate of the objective function encountered on the trace, and $Y_k^i$ denotes a stochastic observation of the objective function at the end of an interval. The initial observations of the objective function are assumed to be Gaussian distributed such that $y_0^i \equiv Y_0^i \sim \mathrm{N}(m_0, \sigma_0^2),$ where the initial

mean $m_0$ and the initial variance $\sigma_0^2$ are determined using maximum likelihood estimation.

Updating the predictive trace model amounts to inferring the posterior process or processes of the latent function *f* conditioned on the trace data generated by the processing nodes over the preceding intervals. In most cases, the form of the link function $\eta$ prevents exact inference from being performed. Those skilled in the art will be aware of a range of approximate inference methods for Gaussian processes, including expectation propagation, Laplace-based methods, Renyi divergence minimisation, variational Bayesian methods, and sampling methods such as Markov chain Monte Carlo.

A particularly advantageous implementation of the present Gaussian process-based trace model is based on sparse variational Bayesian optimisation, in which a variational Gaussian process $q(f)$ is introduced which is determined entirely by a set of inducing points $\mathbf{u} = f(Z)$ corresponding to evaluations of the latent function at a sparse set of *M*

inducing inputs $Z = \{\mathbf{z}_i\}_{i=1}^{M}.$ The resulting distribution of the inducing inputs is given by a variational Gaussian distribution $q(\mathbf{u}) = \mathrm{N}(\mathbf{u}|\mathbf{m}, \mathbf{S})$, where the mean $\mathbf{m}$ and variance $\mathbf{S}$ are variational parameters to be optimised. Conditioning and marginalising the Gaussian process prior over the inducing inputs $\mathbf{u}$ results in a marginal posterior Gaussian process given by Equation (6):

$$q(f) = \mathrm{GP}(f \,|\, \mu(\cdot), \Sigma(\cdot, \cdot)), \qquad (6)$$

where

$$\mu(\cdot) = \mathbf{k}_Z(\cdot)^{\mathrm{T}} \mathbf{K}_{ZZ}^{-1} \mathbf{m}, \qquad (7)$$

and

$$\Sigma(\cdot, \cdot) = k(\cdot, \cdot) + \mathbf{k}_Z(\cdot)^{\mathrm{T}} \mathbf{K}_{ZZ}^{-1} (\mathbf{S} - \mathbf{K}_{ZZ}) \mathbf{K}_{ZZ}^{-1} \mathbf{k}_Z(\cdot), \qquad (8)$$

where $\mathbf{K}_{ZZ}$ is a covariance matrix with elements $[K_{ZZ}]_{ij} = k(\mathbf{z}_i, \mathbf{z}_j)$, and $\mathbf{k}_Z(\cdot)$ is a vector-valued function given by

$$\mathbf{k}_Z(\cdot) = [k(\mathbf{z}_i, \cdot)]_{i=1}^{M}.$$

The method proceeds by optimising the variational parameters $\mathbf{m}, \mathbf{S}$ of the variational normal distribution, along with the inducing inputs $Z$ and the variance $\sigma^2$ any other hyperparameters associated with the Gaussian process model, with respect to an evidence lower bound (ELBO) of the log marginal likelihood $\log p\big(\{y_j^i\}\big)$ of the trace data, as given by Equation (9):

$$\mathrm{ELBO} = \sum_{i=1}^{N} \sum_{j=1}^{m_i} \mathbb{E}_{q(f)} \left[ \log \mathrm{N} \left( y_j^i \,\Big|\, \eta \left[ f\left( \{Y_{k-l}^i\}_{l=0}^{q-1}, \{x_{k-l}^i\}_{l=0}^{q-1} \right), t_j^i - T_k \right], \sigma^2 \right) \right] \qquad (9)$$

$$- \mathrm{KL}[q(\mathbf{u}) \| p(\mathbf{u})],$$

with $k$ such that $T_k \leq t_j^i < T_{k+1}$, $T_k$ and in which $p(\mathbf{u}) = \text{N}(\mathbf{u}|\mathbf{0}, \mathbf{K}_{ZZ})$, $m_i$ is the number of trace observations recorded so far for the $i^{th}$ processing node, and KL denotes the Kullback-Leibler divergence. The KL divergence can be computed analytically at a cost of $O(M^3)$ operations, given that both $q(\mathbf{u})$ and $p(\mathbf{u})$ are multivariate Gaussian distributions. By randomly sampling mini-batches of size $N_b$, an unbiased estimate of the expectation term can be computed at a cost of $O(N_b M^2)$ operations, resulting in a total cost of $O(N_b M^2 + M^3)$ for evaluating the ELBO (or its derivatives, using reverse-mode differentiation). By choosing the number M of inducing inputs and the size $N_b$ of the mini-batches to both be much smaller than the total number of recorded observations $Nm_i$, the present method results in significantly improved scalability to large dataset compared with conventional Gaussian process inference methods, which would typically result in a computational cost of $O(N^3 m_i^3)$. Given that optimisation traces typically include large numbers of stochastic gradient steps (particularly in the case of complex, high-dimensional machine learning models), the computational efficiency of the sparse variational method is highly advantageous for updating the predictive trace model.

In some examples, the Gaussian process hyperparameters and the inducing inputs may be combined with the variational parameters **m, S** and updated in a single update step. In other examples, the hyperparameters and/or the inducing inputs are updated in an inner optimisation loop, and the remaining parameters updated in an outer optimisation loop, or vice-versa. It is noted that the variational parameters **m, S** can be updated using natural gradient descent, whereas the hyperparameters and the inducing inputs cannot be updated using natural gradient descent, as the hyperparameters and the inducing inputs are not associated with a probability distribution, and hence the natural gradient is undefined. For examples in which the variational parameters are updated using natural gradient descent, an effective approach is to update the variational parameters using natural gradient descent followed by updating of the hyperparameters and the inducing inputs using one or more alternative optimisation methods. The resulting hybrid approach alternates between steps of natural gradient descent and the other chosen optimisation method. In a specific example, natural gradient descent is alternated with Adam.

**Example method for updating learning rates**

As mentioned above, the predictive trace model is able to give a probabilistic prediction of the objective function at the end of an interval, including, for example, predicted quantiles. In an example, the learning rates are updated on the basis of predicted quantiles of the objective function at the end of the interval. More specifically, the updated learning rates are chosen to maximise the predicted $\alpha_i$-quantiles $q_{\alpha i}$ of the optimisation trace at the end of the next interval, where $\alpha_i = (2i-1)/2Q$ for $i = 1,..., Q$, where $Q$ is the number of available processing nodes. The resulting learning rates are given by to Equation (10):

$$x_k^i = \underset{x}{\arg\max}\, q_{\alpha_i}\left[\Gamma\big(\{Y_{k-l}\}_{l=0}^{q-1}, \{x_{k-l}\}_{l=1}^{q-1}, x, t - T_k\big)\right], \qquad (10)$$

where the quantiles are predicted by drawing multiple samples from the Gaussian process model. In some examples, the value of $x$ in Equation (10) is restricted to a fixed domain, for example $x \in [0,1]$. Alternatively, or additionally, the value of $x$ may be restricted on the basis the previous value of the learning rate. For example, the value of $x$ may be restricted to be within fixed proportions of the previous learning rate, for example within an order of magnitude.

The above strategy results in a set of learning rates which ranges from optimistic to risk averse, thereby simultaneously implementing different strategies for the exploration/exploitation dilemma. For example, in the case of two processing nodes (as shown in Figure 3), the learning rates are chosen to respectively maximise the predicted 1/4- and 3/4-quantiles. Maximising the predicted 1/4- quantile is a risk-averse choice, because the model predicts a 75% probability of the optimisation trace reaching higher than the predicted 1/4-quantile. By contrast, maximising the predicted 3/4-quantile is an optimistic choice, because the model predicts only a 25% probability of the optimisation trace reaching higher than the predicted 3/4-quantile.

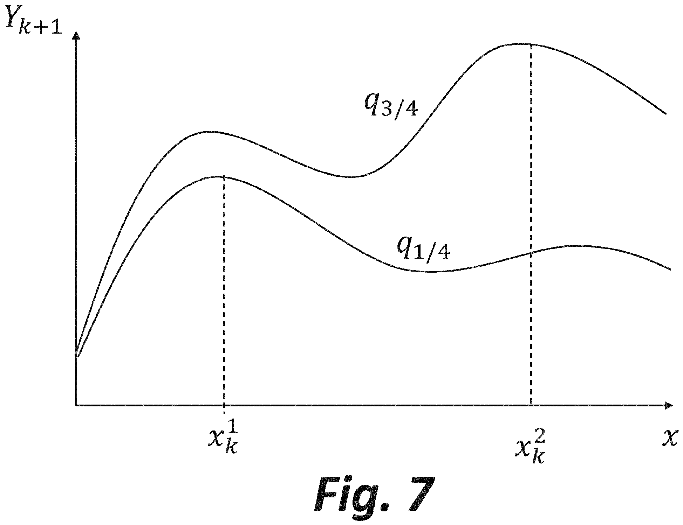

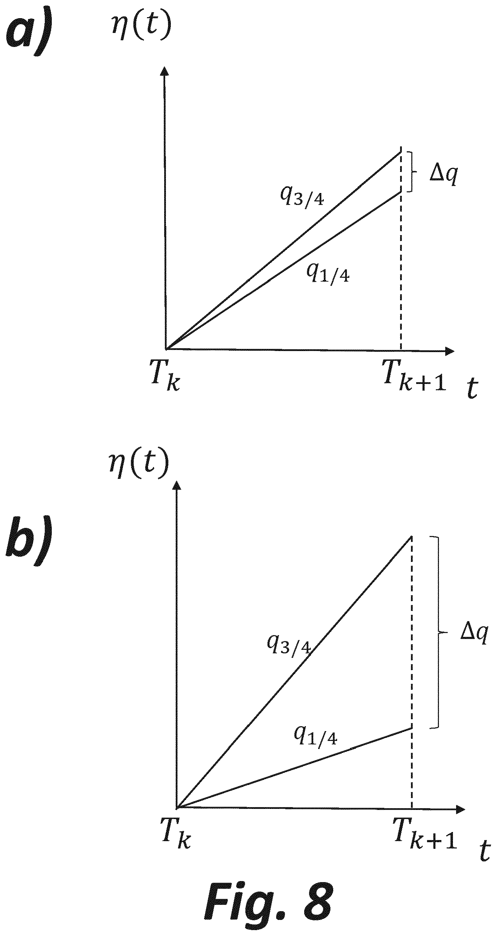

Figure 7 shows an example of predicted quantiles of the final value $Y_{k+1}$ of an optimisation trace within an interval, as a function of the learning rate $x$. In this example, two processing nodes are available, and therefore two learning rates $x_k^1$ and $x_k^2$ are selected which maximise the predicted 1/4-quantile $q_{1/4}$ and the predicted 3/4-quantile $q_{3/4}$ respectively. In this example, the predictive trace model is based on a linear link function $\eta_{\text{lin}}$, as described above. Figures 8a and 8b show the predicted quantiles $q_{1/4}$ and $q_{3/4}$ of the traces as predicted by the linear link function, for the two learning rates $x_k^1$ and $x_k^2$ as a function of step number within the interval $T_k \leq t < T_{k+1}$. It is observed that the predicted distribution of traces for the risk-averse learning rate $x_k^1$ (shown in Figure 8a) has a narrow interquartile range $\Delta q$ and a high lower quartile $q_{1/4}$, reflecting the fact that this choice of learning rate favours exploitation. By contrast, the predicted distribution of traces for the optimistic learning rate $x_k^2$ (shown in Figure 8a) has a wide interquartile range $\Delta q$ and a high upper quartile $q_{3/4}$, reflecting the fact that this choice of learning rate favours exploration.

In other examples, alternative strategies may be used for updating the learning rates using a given predictive trace model. In one example, the learning rates are updated on the basis of an acquisition function, for example based on entropy search or expected improvement.

During experiments, it was found that abruptly changing the learning rate can occasionally lead to aberrant behaviour in the optimisation trace (manifested as steep changes in the value of the objective function in the undesired direction). In order to mitigate this problem, in some examples a classification model is trained in parallel to the predictive trace model, where the classification model is used to estimate a probability of a given learning rate leading to an aberrant trace. In an example, the classification model estimates a probability of an optimisation trace with learning rates and trace observations given by $\left\{ \left\{ Y_{k-l}^i \right\}_{l=0}^{q-1}, \left\{ x_{k-l}^i \right\}_{l=0}^{q-1} \right\}$ displaying aberrant behaviour. In one example, the classification is based only on the current values $\left\{ Y_k^i, x_k^i \right\}$. Each updated learning rate is then restricted to values leading to an estimated probability of failure lower than a respective threshold. In some examples, the threshold is a predetermined threshold. In some examples, the threshold differs across the processor nodes. In one example, the threshold for the $i$th processor node is given by $\alpha_i$. In this way, the threshold probability is lower for more risk-averse learning rate criteria, and is higher for more optimistic learning rate criteria. In other words, a higher probability of failure is tolerated when aiming for exploration, and only a low probability of failure is tolerated when aiming for exploitation. Any suitable classification model may be used, for example a neural network classification model or a Gaussian process classification model. In a specific example, a sparse variational Gaussian process model is used for the classification model (in addition to the sparse variational Gaussian process model used within the predictive trace model).

**Results**

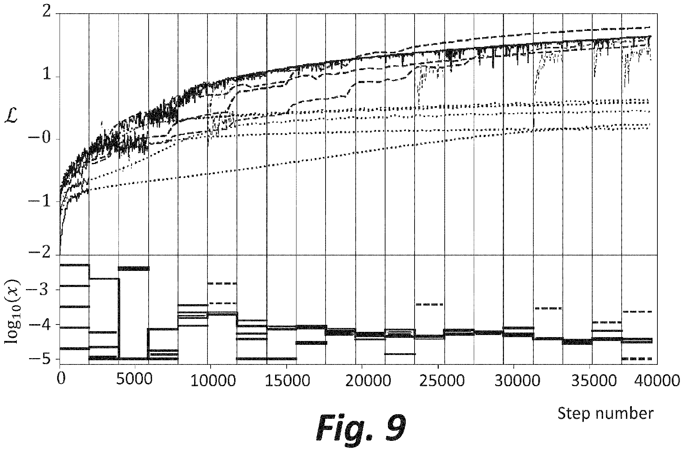

Figure 9 shows results of an experiment in which a 56-layer ResNet neural network (as described in "Deep residual learning for image recognition" by He et al, 2016, Proceedings of the IEEE conference on computer vision and pattern recognition, pp 770-778) is trained to classify images in the publicly available Canadian Institute for Advance Research-10 (CIFAR-10) dataset. The dataset includes 60,000 32x32 colour images, which for the purposes of the experiment are randomly split into 50,000 training images and 10,000 test images. As baselines, the network was trained using Adam over 100 epochs of length 400 with five constant learning rate schedules uniformly spread in log space between $10^{-5}$ and $10^{-2}$, and 12 exponentially-decaying learning rate schedules $\alpha_0 \times \gamma^{\text{epoch}/10}$ for $\alpha_0 = \{10^{-4}, 10^{-3}, 10^{-2}\}$ and $\gamma = \{0.5, 0.63, 0.77, 0.99\}$. The dotted curves in the top frame show smoothed optimisation traces for the constant learning rate schedules, and the dashed curves show smoothed optimisation traces for the three best exponential learning rate schedules.

The ResNet network was also trained in accordance with the present invention using $Q = 5$ co-operating processing nodes, each having its own GPU configured to perform an efficient, highly parallelised implementation of the ResNet network. In this example, a predictive trace model as given by Equation (3) was used with $q = 1$ and a linear link function, where a predicted distribution of the gradient of the link function is determined using a sparse variational Gaussian process model with $M = 100$ inducing points ad a Matérn-5/2 kernel. The objective is recorded every 50 iterations, and the learning rates are updated every 2000 iterations. Each optimisation trace provided to the predictive trace model for a given interval therefore contains 40 observations of the objective function. The horizontal line segments in the lower frame in Figure 9 shows the learning rates for the five processing nodes for each interval of 2000 iterations. The connected segments show the best learning rate for each interval, i.e. the learning rate which yielded the highest value of the objective function at the end of the interval. The connected segments thus represent the sequence of learning rates which led to the resulting composite optimisation trace. It is observed that the variation in learning rates across the processing nodes reduces as the training procedure progresses, as the predictive trace model becomes more assured in its predictions and begins to favour exploitation over exploration. The dashed line segments represent failed runs used to train a classification model as described above.

The solid line in the top frame of Figure 9 shows optimisation traces (without smoothing) generated by the processing nodes using the learning rates shown in the lower frame. It is observed that the resultant composite optimisation trace results in faster training of the neural network model in the initial stages than any of the predetermined schedules, and ends at a higher value after 40000 iterations than all but the best exponentially-decaying learning rate schedule. The table below shows the resulting accuracy at classifying test images for the trained model after 40000 iterations for the best three constant learning rate schedules, the best three exponential learning rate schedules, and for the dynamically-updated learning rate of the present invention.

| Learning rate | Accuracy |
|---|---|
| Constant ($10^{-3}$) | 0.764 |
| Constant ($5 \times 10^{-3}$) | 0.727 |
| Constant ($3 \times 10^{-4}$) | 0.610 |
| Exponential ($\alpha_0 = 10^{-2}$, $\gamma = 0.5$) | 0.835 |
| Exponential ($\alpha_0 = 10^{-2}$, $\gamma = 0.63$) | 0.813 |
| Exponential ($\alpha_0 = 10^{-3}$, $\gamma = 0.63$) | 0.812 |
| Dynamic (5 nodes) | **0.848** |

It is observed that the dynamic learning rate results in a model which is more accurate than any of those trained using the predetermined learning rate schedules. It is noted that, given five processing nodes, an alternative approach would be to try a different exponential learning rate schedule with each of the processing nodes, which would remove the overheads associated with training the predictive trace model. However, it is clear from the above experiment that such an approach would be unlikely to outperform the present method unless a highly optimal set of parameters for the learning model were chosen, which would be unlikely without prior knowledge of the optimisation surface. Even in this case, it is not clear that any choice of exponentially-decaying schedule (or any other predetermined schedule) could outperform the present method in general.

**Application in reinforcement learning system**

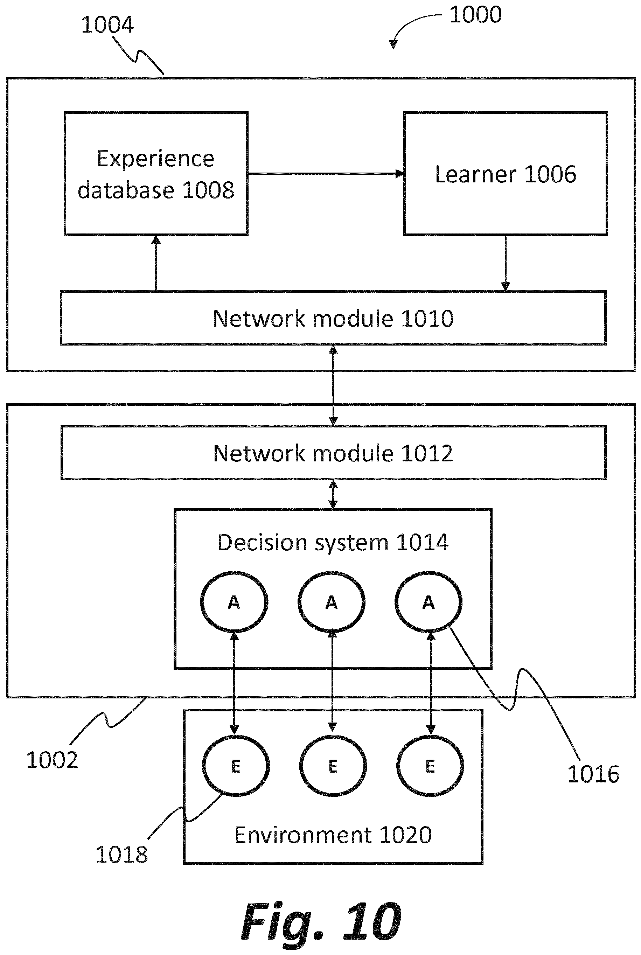

Figure 10 shows a reinforcement learning system 1000 which incorporates an embodiment of the present invention. The system 1000 includes a client subsystem 1002 and a learning subsystem 1004, and data is transferred between the client subsystem 1002 and the learning subsystem 1004 via a first network module 1010 and a second network module 1012. In the present example, the learning subsystem 1004 is a distributed cloud-based server system, and interacts with the client subsystem 1002 using an Application Programming Interface (API), though in other examples a learning subsystem may be a server, a compute cluster, or any other suitable computing device or system. In a specific example, the reinforcement learning system 1000 is used to manage a fleet of taxis in a city. The client subsystem 1002 is operated by the taxi fleet operator, whereas the learning subsystem 1004 is operated by a service provider. In other examples, the functions of the learning subsystem 1004 and the client subsystem 1002 may be performed by one or more devices operated by a single entity.

The client subsystem 1002 includes a decision system 1014 comprising multiple agents, collectively referred to as agents 1016, of which three are shown for ease of illustration. The agents 1016 are associated with entities 1018 that interact with a physical environment 1020. In the present example, the agents 1016 are remote from the entities 1018, though in other examples the agents could be implemented using processing circuitry local to the corresponding entities 1018. The agents 1016 receive observation signals from the entities corresponding to observations of states of the environment 1020, and generate action signals in dependence on the received observation signals in accordance with one or more policies. The agents 1016 also receive rewards depending on the outcomes of the actions performed. Policies may be deterministic or stochastic, and can generally be viewed as parameterised mappings from state observations to actions. In the present example, a state observation offers only a partial description of the environment 1018 (as is typically the case of physical environments), though in other examples a state observation may correspond to a complete description of a state of an environment (as is typically the case for a virtual environment such as in a video game).

The learning subsystem 1002 includes a learner 1006 and an experience database 1008. The experience database 1008 receives and stores experience data corresponding to sequences of state observations, actions and rewards encountered by the agents 1016. The learner 1006 processes the experience data to generate policy data for the agents 1016, which the agents 1016 will use when selecting which subsequent actions to perform. Depending on the reinforcement learning algorithm being implemented, the learner 1006 may perform a stochastic gradient method in order to generate the policy data. In one example, the learner 1006 implements a policy gradient method in which a policy of an agent 1016 is parameterised by a set of parameters, and the learner 1006 updates the values of the parameters using a stochastic gradient method to increase an objective function indicative of expected future rewards for the agent 1016. In some examples, the learner 1006 stores parameters of a value function approximator, which is a model for associating values indicative of expected future rewards for the agent with state observations or state-action observations. A value function approximator may be implemented using, for example, a deep neural network. In some examples, the learner 1006 performs a stochastic gradient method to update the value function approximator, for example to decrease an objective function indicative of an error associated with the values predicted by the value function approximator. The updated parameters of the value function approximator are used to generate policy data for the agents 1016.

It is desirable for the 1006 learner in the reinforcement learning system 1000 to perform efficient policy updates such that the agents 1016 can learn policies within a practicable timescale and can adapt to changes in the environment. In the present example, the learner 1006 performs stochastic gradient descent using multiple co-operating processing nodes in accordance with the methods described herein, allowing the learner 1006 to update the parameters of the value function approximator more efficiently than could be achieved using existing methods.

It is noted that stochastic gradient descent may be used in other contexts in reinforcement learning, for example in learning a transition model in a model-based reinforcement learning algorithm, or in learning a predictive model of an environment, for example as described in European patent publication EP3467718. The methods described herein may be used in any of these contexts to facilitate efficient use of parallel computing resources within the learning subsystem 1004, in turn improving the efficiency and viability of reinforcement learning for various applications.

**Modifications and further embodiments**

The above embodiments are to be understood as illustrative examples of the invention. Further embodiments of the invention are envisaged. For example, the predictive trace model could be implemented using a neural network model, a neural process model, or a deep Gaussian process model. Furthermore, the method described herein could be implemented in combination with a fixed learning schedule, for example by implementing the present method until predetermined criteria are satisfied, then switching to a fixed learning schedule with parameters derived from the predictive trace model. In this way, overheads for the later intervals could be reduced whilst still making use of the efficiency gains from the earlier intervals. Finally, the present method could be used to improve the efficiency of stochastic gradient methods in contexts other than machine learning, for example in statistical inference or any other form of gradient-based optimisation.

The above sections describe a method in which parallel processing nodes are leveraged to perform efficient stochastic gradient descent (or variants thereof). Alternatively, the predictive trace model described herein could be used to dynamically update the learning rate for a single stochastic gradient run, and thereby improve the efficiency of stochastic gradient methods using a single processing node. The method would proceed in the same manner as for parallel processing nodes, but without the need to choose a best performing node at the end of each interval. Optimisation traces generated during intervals within the stochastic gradient run would be used to iteratively update the predictive trace model, and the updated predictive trace model would be used to determine learning rates for subsequent intervals.

It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

**Claims**

1.  A computer-implemented method of training a machine learning model using a training dataset and a plurality of processing nodes, the machine learning model having a set of parameters and an associated objective function providing performance measures for the machine learning model as the values for the set of parameters change during training, the method comprising:

    setting initial values for the set of parameters for the machine learning model and providing the initial values to each of the processing nodes;
    for each of the processing nodes, setting a respective different initial learning rate;
    initialising a predictive model that predicts values of the objective function following a next sequence of stochastic gradient steps at respective different learning rates; and

iteratively:

generating, by each of the processing nodes, a respective optimisation trace and respective updated values for the set of parameters according to a sequence of stochastic gradient steps using the respective learning rate;

updating the predictive model using the generated optimisation traces;

determining the processing node providing the best performance on the basis of the generated optimisation traces;

updating the values for the set of parameters for each processing node to the updated values of the processing node determined to provide the best performance; and

updating the respective different learning rate for each of the processing nodes on the basis of the updated predictive model.

2. The method of claim 1, wherein the predictive model comprises a link function for predicting increments in a given optimisation trace, the link function having parameters depending on a latent function with one or more components distributed as Gaussian processes, the latent function being dependent on the learning rate for the optimisation trace and an initial value of the optimisation trace.

3. The method of claim 2, wherein the link function is a linear function with a slope depending on the latent function.

4. The method of claim 2, wherein the link function is an exponential function with a logit offset and a logit rate depending on the latent function.

5. The method of any of claims 2 to 4, wherein updating the predictive model comprises updating the Gaussian processes for the one or more components of the latent function using sparse variational Bayesian inference.

6. The method of any preceding claim, wherein the respective different learning rates are updated on the basis of predicted quantiles of a final value of the optimisation trace.

7. The method of any preceding claim, wherein the respective different learning rate for each processing node is constant between the updating of the respective learning rates.

8. The method of any preceding claim, comprising:

training a classification model to estimate a probability of a given learning rate leading to an aberrant optimisation trace; and

restricting each respective updated learning rate to having an estimated probability of failure lower than a respective threshold.

9. The method of any preceding claim, wherein setting the respective different initial learning rates comprises setting the respective different initial learning rates on a regular grid.

10. The method of any preceding claim, comprising restricting the updating of each respective different learning rate to within an order of magnitude.

11. The method of any preceding claim, wherein the machine learning model is a supervised learning model.

12. The method of any of claims 1 to 11, wherein the machine learning model is an unsupervised learning model.

13. The method of any of claims 1 to 11, wherein the machine learning model is incorporated within a reinforcement learning system.

14. A computer program product comprising instructions which, when run by processing circuitry of a data processing system comprising a plurality of processing nodes, causes the data processing system to perform the method of any preceding claim.

15. A data processing system for training a machine learning model using a training dataset, the machine learning model having an associated objective function providing performance measures for the machine learning model as the values for the set of parameters change during training, the data processing system comprising a plurality of processing nodes each having respective processing circuitry, wherein the data processing system is arranged to:

set initial values for the set of parameters for the machine learning model and providing the initial values to each of the processing nodes;
for each of the processing nodes, setting a respective different initial learning rate;
initialise a predictive model that predicts values of the objective function following a next sequence of stochastic gradient steps at respective different learning rates; and
iteratively:

generate, using the respective processing circuitry of each of the processing nodes, a respective optimisation trace and respective updated values for the set of parameters according to a sequence of stochastic gradient steps using the respective learning rate;
update the predictive model using the generated optimisation traces;
determine the processing node providing the best performance on the basis of the generated optimisation traces;
update the values for the set of parameters for each processing node to the updated values of the processing node determined to provide the best performance; and
update the respective different learning rate for each of the processing nodes on the basis of the updated predictive model.

**Fig. 1**

**Fig. 2**

300

Processing node 302A

Memory circuitry 308A

ML model hyperparameters

Optimisation trace A

ML model parameters A

Learning rate A

Processing circuitry 306A

Learning rate controller 304

Memory circuitry 312

Trace data

Predictive model parameters

Processing circuitry 310

Training dataset

Main storage 314

Processing node 302B

Memory circuitry 308B

ML model hyperparameters

Optimisation trace B

ML model parameters B

Learning rate B

Processing circuitry 306B

*Fig. 3*

**Fig. 4**

**Fig. 5**

**Fig. 6**

**Fig. 7**

Fig. 8

**Fig. 9**

Step number

*Fig. 10*

Europäisches
Patentamt

European
Patent Office

Office européen
des brevets

# EUROPEAN SEARCH REPORT

Application Number

EP 19 21 2209

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MAX JADERBERG ET AL: "Population Based Training of Neural Networks", ARXIV.ORG, CORNELL UNIVERSITY LIBRARY, 201 OLIN LIBRARY CORNELL UNIVERSITY ITHACA, NY 14853, 27 November 2017 (2017-11-27), XP081300118, * abstract; Sections 1-4; Appendix A; figure 1 * | 1-15 | INV. G06N20/00 G06N7/00 |
| A,D | STEFAN FALKNER ET AL: "BOHB: Robust and Efficient Hyperparameter Optimization at Scale", ARXIV.ORG, CORNELL UNIVERSITY LIBRARY, 201 OLIN LIBRARY CORNELL UNIVERSITY ITHACA, NY 14853, 4 July 2018 (2018-07-04), XP081244146, * abstract; Sections 1, 3, 4, * | 1-15 | |
| A | SHAHRIARI BOBAK ET AL: "Taking the Human Out of the Loop: A Review of Bayesian Optimization", PROCEEDINGS OF THE IEEE, IEEE. NEW YORK, US, vol. 104, no. 1, 2016, pages 148-175, XP011594739, ISSN: 0018-9219, DOI: 10.1109/JPROC.2015.2494218 [retrieved on 2015-12-18] * abstract; Sections I-V * | 1-15 | TECHNICAL FIELDS SEARCHED (IPC) G06N |

-/--

The present search report has been drawn up for all claims

| Place of search | Date of completion of the search | Examiner |
|---|---|---|
| The Hague | 27 May 2020 | Klasen, TJ |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | QUANMING YAO ET AL: "Taking Human out of Learning Applications: A Survey on Automated Machine Learning", ARXIV.ORG, CORNELL UNIVERSITY LIBRARY, 201 OLIN LIBRARY CORNELL UNIVERSITY ITHACA, NY 14853, 31 October 2018 (2018-10-31), XP081017670, * abstract; Sections 1-4 * ----- | 1-15 | |
| A | Aaron Klein ET AL: "Learning curve prediction with Bayesian neural networks", OpenReview.net, 3 March 2017 (2017-03-03), XP055467750, Retrieved from the Internet: URL:https://openreview.net/pdf?id=S11KBYcl x [retrieved on 2018-04-17] * abstract; Sections 1-3 * ----- | 1-15 | |

TECHNICAL FIELDS
SEARCHED        (IPC)

The present search report has been drawn up for all claims

| Place of search | Date of completion of the search | Examiner |
|---|---|---|
| The Hague | 27 May 2020 | Klasen, TJ |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3467718 A

**Non-patent literature cited in the description**

- **SWERKY et al.** *Freeze-thaw Bayesian optimization,* 2018
- **LI et al.** Hyperband: A novel bandit-based approach to hyperparameter optimization. *Journal of Machine Learning Research,* 2018, vol. 18 (185), 1-52
- **FALKNER et al.** *Bohb: Robust and efficient hyperparameter optimization at scale,* 2018
- **HE et al.** Deep residual learning for image recognition. *Proceedings of the IEEE conference on computer vision and pattern recognition,* 2016, 770-778